# EUROPEAN PATENT APPLICATION

(11) **EP 4 338 870 A1**
(43) Date of publication of application: **20.03.2024**
(21) Application number: 21941922.3
(22) Date of filing: 13.05.2021
(51) Int. Cl.: B23B 25/06, G05B 19/404, B23Q 15/013, B23Q 17/09

(54) **PROCESSING CONDITION MANAGMENT SYSTEM, PROCESSING CONTROL DEVICE, PROCESSING SYSTEM, AND PROCESSING PROGRAM**

(71) Applicant: SUMITOMO ELECTRIC INDUSTRIES, LTD., Osaka-shi, Osaka 541-0041 (JP)
(72) Inventor: AOKI, Tomoya, Osaka-shi, Osaka 541-0041 (JP)
(74) Representative: Boult Wade Tennant LLP
(86) International application number: PCT/JP2021/018225
(87) International publication number: WO 2022/239189

(57) **Abstract**

A machining condition management system includes: a cutting tool that includes a cutting edge and a sensor; a storage that stores a mechanical machining condition for a machine tool and a measurement value, the machine tool performing machining using the cutting tool, the measurement value being measured by the sensor; and a processing unit that performs revision of the mechanical machining condition based on the mechanical machining condition and the measurement value stored in the storage. The processing unit determines a load on the cutting tool based on the measurement value in a first cutting process under the mechanical machining condition, calculates a revised value for revising the mechanical machining condition for at least one machining interval that has fulfilled a prescribed condition in the determination for the first cutting process, and updates the mechanical machining condition in a second cutting process, based on the calculated revised value, and outputs the mechanical machining condition in the second cutting process.

## Description

### TECHNICAL FIELD

The present disclosure relates to a machining condition management system, a machining control device, a machining system, and a machining program.

### BACKGROUND ART

PTL 1 (Japanese National Patent Publication No. 2018-534680) discloses a method that is executed in a control system including a programable logic control unit configured to control the operation of a machine and a numerical control unit configured to control the relative motion between a tool of the machine and a workpiece. This method includes evaluating an input signal received by the programable logic control unit, with respect to a first condition. The input signal includes information relevant to a mechanical machining condition altering procedure that is executed depending on the state of the tool or the interaction between the tool and the workpiece. This method includes providing the information to the numerical control unit in response to the input signal fulfilling the first condition.

### CITATION LIST

### PATENT LITERATURE

PTL 1: Japanese National Patent Publication No. 2018-534680

### SUMMARY OF INVENTION

A machining condition management system according to the present disclosure includes: a cutting tool that includes a cutting edge and a sensor; a storage that stores a mechanical machining condition for a machine tool and a measurement value, the machine tool performing machining using the cutting tool, the measurement value being measured by the sensor; and a processing unit that performs revision of the mechanical machining condition based on the mechanical machining condition and the measurement value stored in the storage. The processing unit determines a load on the cutting tool based on the measurement value in a first cutting process under the mechanical machining condition, calculates a revised value for revising the mechanical machining condition for at least one machining interval that has fulfilled a prescribed condition in the determination for the first cutting process, and updates the mechanical machining condition in a second cutting process, based on the calculated revised value, and outputs the mechanical machining condition in the second cutting process.

A machining control device according to the present disclosure includes; a storage that stores a mechanical machining condition for a machine tool and a measurement value, the machine tool performing machining using a cutting tool that includes a cutting edge and a sensor, the measurement value being measured by the sensor; a processing unit that performs revision of the mechanical machining condition based on the mechanical machining condition and the measurement value stored in the storage; and a drive control unit that performs machining under the mechanical machining condition. The processing unit determines a load on the cutting tool based on the measurement value in a first cutting process under the mechanical machining condition, calculates a revised value for revising the mechanical machining condition for at least one machining interval that has fulfilled a prescribed condition in the determination for the first cutting process, and updates the mechanical machining condition in a second cutting process, based on the calculated revised value, and outputs the mechanical machining condition in the second cutting process, to the drive control unit.

A machining system according to the present disclosure includes a machine tool that performs machining using a cutting tool that includes a cutting edge and a sensor; and a machining control device that controls the machine tool based on a mechanical machining condition. The machining control device includes: a storage that stores the mechanical machining condition for the machine tool and a measurement value, the measurement value being measured by the sensor; a processing unit that performs revision of the mechanical machining condition based on the mechanical machining condition and the measurement value stored in the storage; and a drive control unit that performs machining under the mechanical machining condition. The processing unit determines a load on the cutting tool based on the measurement value in a first cutting process under the mechanical machining condition, calculates a revised value for revising the mechanical machining condition for at least one machining interval that has fulfilled a prescribed condition in the determination for the first cutting process, and updates the mechanical machining condition in a second cutting process, based on the calculated revised value, and outputs the mechanical machining condition in the second cutting process, to the drive control unit.

A machining program according to the present disclosure is executed by a processing unit that performs revision of a mechanical machining condition for a machine tool based on the mechanical machining condition and a measurement value, the machine tool performing machining using a cutting tool that includes a cutting edge and a sensor, the measurement value being measured by the sensor. The machining program includes: determining a load on the cutting tool based on the measurement value in a first cutting process under the mechanical machining condition; calculating a revised value for revising the mechanical machining condition for at least one machining interval that has fulfilled a prescribed condition in the determination for the first cutting process; and updating the mechanical machining condition in a second cutting process, based on the calculated revised value, and outputting the mechanical machining condition in the second cutting process.

### BRIEF DESCRIPTION OF DRAWINGS

Fig. 1 is a diagram showing the configuration of a machining system according to an embodiment.
Fig. 2 is a diagram showing the configuration of a sensor module according to the embodiment.
Fig. 3 is a diagram showing the configuration of an analysis device according to the embodiment.
Fig. 4 is a flowchart showing a procedure that is executed by a processor of the analysis device according to the embodiment.
Fig. 5 is a diagram showing an example in which a machining interval is identified from measurement values of a sensor according to the embodiment.
Fig. 6 is a diagram showing an example in which a distribution evaluation is performed to measurement values of the sensor according to the embodiment.
Fig. 7 is a diagram showing an example in which a result of the distribution evaluation is applied to time-series data about measurement values of the sensor according to the embodiment.
Fig. 8 is a diagram showing an example of a revised value for revising a mechanical machining condition for a machine tool according to the embodiment.
Fig. 9 is a diagram showing an example of estimated measurement values of the sensor after revision of the mechanical machining condition for the machine tool according to the embodiment.
Fig. 10 is a diagram showing an example of a distribution evaluation normalized for measurement values of the sensor according to the embodiment.
Fig. 11 is a diagram showing the configuration of a machining control device according to the embodiment.

### DETAILED DESCRIPTION

### [Problem to be Solved by the Present Disclosure]

PTL 1 describes a technology in which the state of the cutting tool is monitored, but a technology in which the load on the cutting tool can be more accurately determined than in the above technology and the mechanical machining condition can be revised based on the determination is demanded.

An object of the present disclosure is to provide a machining condition management system, a machining control device, a machining system, and a machining program that make it possible to appropriately revise the mechanical machining condition based on the determination about the load on the cutting tool.

### [Advantageous Effect of the Present Disclosure]

According to the present disclosure, it is possible to provide a machining condition management system, a machining control device, a machining system, and a machining program that make it possible to appropriately revise the mechanical machining condition based on the determination about the load on the cutting tool.

### [Description of Embodiments]

First, contents of embodiments of the present disclosure are listed and described.
(1) A machining condition management system according to the present disclosure includes: a cutting tool that includes a cutting edge and a sensor; a storage that stores a mechanical machining condition for a machine tool and a measurement value, the machine tool performing machining using the cutting tool, the measurement value being measured by the sensor; and a processing unit that performs revision of the mechanical machining condition based on the mechanical machining condition and the measurement value stored in the storage. The processing unit determines a load on the cutting tool based on the measurement value in a first cutting process under the mechanical machining condition, calculates a revised value for revising the mechanical machining condition for at least one machining interval that has fulfilled a prescribed condition in the determination for the first cutting process, and updates the mechanical machining condition in a second cutting process, based on the calculated revised value, and outputs the mechanical machining condition in the second cutting process.

In this way, the processing unit determines the load on the cutting tool based on the measurement value in the first cutting process under the mechanical machining condition, and calculates the revised value for revising the mechanical machining condition for at least one machining interval that has fulfilled the prescribed condition in the determination for the first cutting process, and therefore, it is possible to appropriately revise the mechanical machining condition based on the determination about the load on the cutting tool.

(2) Preferably, the processing unit should determine that an interval at which the measurement value in the first cutting process exceeds a previously set threshold is the machining interval.

By this configuration, for example, it is possible to distinctively identify the machining interval and a non-machining interval for time-series data about the measurement value measured by the sensor, and to perform the determination about the load on the cutting tool for the machining interval.

(3) Preferably, the processing unit should obtain a distribution of the measurement value in the first cutting process, and should determine an interval at which an excessive load has been generated, based on a statistic of the distribution.

By this configuration, for example, it is possible to determine the interval at which the excessive load has been generated, by comparing loads on the cutting tool at vicinal machining paths.

(4) Preferably, the sensor should include at least one of a strain sensor, a pressure sensor, and a displacement sensor.

By this configuration, for example, it is possible to more accurately determine the state of the cutting edge of the cutting tool.

(5) Preferably, the machining condition management system should further include a display unit that can display time-series data about the measurement value, in which the processing unit identifies an interval at which the mechanical machining condition is revised, for the time-series data about the measurement value, and displays the interval at which the mechanical machining condition is revised, on the display unit.

By this configuration, for example, it is possible to easily know, from the display unit, an interval at which the mechanical machining condition has been revised based on the determination about the load on the cutting tool.

(6) A machining control device according to the present disclosure includes: a storage that stores a mechanical machining condition for a machine tool and a measurement value, the machine tool performing machining using a cutting tool that includes a cutting edge and a sensor, the measurement value being measured by the sensor; a processing unit that performs revision of the mechanical machining condition based on the mechanical machining condition and the measurement value stored in the storage; and a drive control unit that performs machining under the mechanical machining condition. The processing unit determines a load on the cutting tool based on the measurement value in a first cutting process under the mechanical machining condition, calculates a revised value for revising the mechanical machining condition for at least one machining interval that has fulfilled a prescribed condition in the determination for the first cutting process, and updates the mechanical machining condition in a second cutting process, based on the calculated revised value, and outputs the mechanical machining condition in the second cutting process, to the drive control unit.

In this way, the processing unit determines the load on the cutting tool based on the measurement value in the first cutting process under the mechanical machining condition, and calculates the revised value for revising the mechanical machining condition for at least one machining interval that has fulfilled the prescribed condition in the determination for the first cutting process, and therefore, it is possible to appropriately revise the mechanical machining condition based on the determination about the load on the cutting tool.

(7) A machining system according to the present disclosure includes: a machine tool that performs machining using a cutting tool that includes a cutting edge and a sensor; and a machining control device that controls the machine tool based on a mechanical machining condition. The machining control device includes: a storage that stores the mechanical machining condition for the machine tool and a measurement value, the measurement value being measured by the sensor; a processing unit that performs revision of the mechanical machining condition based on the mechanical machining condition and the measurement value stored in the storage; and a drive control unit that performs machining under the mechanical machining condition. The processing unit determines a load on the cutting tool based on the measurement value in a first cutting process under the mechanical machining condition, calculates a revised value for revising the mechanical machining condition for at least one machining interval that has fulfilled a prescribed condition in the determination for the first cutting process, and updates the mechanical machining condition in a second cutting process, based on the calculated revised value, and outputs the mechanical machining condition in the second cutting process, to the drive control unit.

In this way, the processing unit determines the load on the cutting tool based on the measurement value in the first cutting process under the mechanical machining condition, and calculates the revised value for revising the mechanical machining condition for at least one machining interval that has fulfilled the prescribed condition in the determination for the first cutting process, and therefore, it is possible to appropriately revise the mechanical machining condition based on the determination about the load on the cutting tool.

(8) A machining program according to the present disclosure is executed by a processing unit that performs revision of a mechanical machining condition for a machine tool based on the mechanical machining condition and a measurement value, the machine tool performing machining using a cutting tool that includes a cutting edge and a sensor, the measurement value being measured by the sensor. The machining program includes: determining a load on the cutting tool based on the measurement value in a first cutting process under the mechanical machining condition; calculating a revised value for revising the mechanical machining condition for at least one machining interval that has fulfilled a prescribed condition in the determination for the first cutting process; and updating the mechanical machining condition in a second cutting process, based on the calculated revised value, and outputting the mechanical machining condition in the second cutting process.

In this way, the processing unit determines the load on the cutting tool based on the measurement value in the first cutting process under the mechanical machining condition, and calculates the revised value for revising the mechanical machining condition for at least one machining interval that has fulfilled the prescribed condition in the determination for the first cutting process, and therefore, it is possible to appropriately revise the mechanical machining condition based on the determination about the load on the cutting tool.

### [Details of Embodiments in the Present Disclosure]

With reference to the drawings, embodiments in the present disclosure will be described below in detail. In the following descriptions, identical or corresponding elements are denoted by identical reference characters, and detailed descriptions therefor are not repeated.

### <Configuration of Machining System>

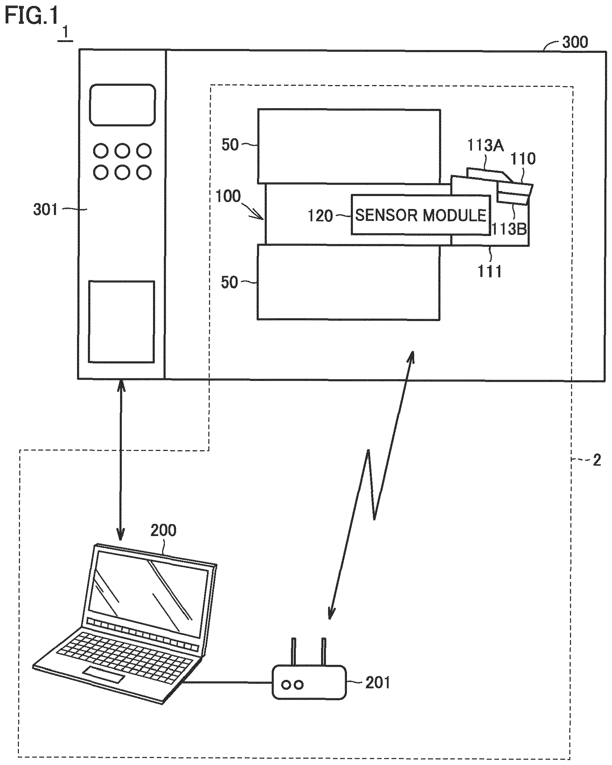

With reference to Fig. 1 to Fig. 3, the configuration of a machining system 1 according to an embodiment will be described.

Fig. 1 is a diagram showing the configuration of the machining system according to the embodiment. As shown in Fig. 1, machining system 1 includes a cutting tool 100, an analysis device 200, a wireless device 201, a machine tool 300, and a machining control device 301.

Cutting tool 100 is attached to machine tool 300. Machining control device 301 controls machine tool 300 in accordance with machining path information and a cutting condition that are set, and performs the cutting machining of a workpiece with attached cutting tool 100. The machining path information includes information such as the coordinate position of cutting tool 100, the locus of cutting tool 100, and the number of paths. The cutting condition includes information such as the cutting way of cutting tool 100, the feed way (feed speed) of cutting tool 100, and the cutting speed of cutting tool 100. In the embodiment, the machining path information and the cutting condition are collectively referred to as a mechanical machining condition, and hereinafter, the mechanical machining condition includes information about at least one of the machining path information and the cutting condition.

In machining system 1 according to the embodiment, a sensor module 120 is provided in cutting tool 100, and the load on cutting tool 100 can be measured by a sensor. Therefore, machining system 1 performs a control to revise the mechanical machining condition such that the load on cutting tool 100 does not become excessive in a machining step of performing machining, using information about the load on cutting tool 100 that is measured by sensor module 120. By performing the control to revise the mechanical machining condition in this way, machining system 1 restrains the decrease in machining accuracy and the breakage of cutting tool 100 due to the temporary generation of an excessive load on cutting tool 100.

Specifically, machining system 1 sends the information about the load on cutting tool 100 that is measured by sensor module 120, to wireless device 201, as a wireless signal, and analysis device 200 analyzes the information about the load on cutting tool 100 that is received by wireless device 201. Analysis device 200 calculates a revised value for the mechanical machining condition, updates the mechanical machining condition based on the calculated revised value, and outputs the mechanical machining condition to machining control device 301.

Machining system 1 can be realized by combining cutting tool 100 having sensor module 120 built in, analysis device 200 and wireless device 201, with existing machine tool 300. That is, machining system 1 can be realized by preparing a machining condition management system 2 configured to include cutting tool 100, analysis device 200 and wireless device 201 and thereafter incorporating machining condition management system 2 in existing machine tool 300. Machining system 1 and machining condition management system 2 shown in Fig. 1 show an example, and another configuration may be adopted. Further, machining system 1 is not limited to a configuration in which one cutting tool 100 is included, and may have a configuration in which a plurality of cutting tools 100 is included. Furthermore, machining system 1 is not limited to a configuration in which one analysis device 200 is included, and may have a configuration in which a plurality of analysis devices 200 is included.

Individual configurations will be described below in more detail.

### <Cutting Tool>

As shown in Fig. 1, cutting tool 100 is fixed so as to be vertically sandwiched by tool rests 50 in machine tool 300. For example, cutting tool 100 is a tool for lathe turning machining that is used for the machining of a rotating workpiece, and is attached to machine tool 300 such as a lathe.

A portion of cutting tool 100 that performs the cutting machining of the workpiece is a cutting insert 110 that includes a cutting edge, and cutting insert 110 can be replaced in the case of being abraded or broken. Specifically, cutting tool 100 includes cutting insert 110 and a shank 111 that holds cutting insert 110. That is, cutting tool 100 is a so-called throwaway tool. Cutting insert 110 is held by fixing members 113A, 113B and shank 111.

Cutting tool 100 may have a configuration in which fixing members 113A, 113B are not included and cutting tool 100 itself includes a cutting edge. That is, cutting tool 100 may be a solid tool or a brazed tool.

For example, cutting tool 100 may adopt a machining scheme in which a tool rotates on a fixed workpiece, and may be attached to a machine tool such as a milling machine. More specifically, cutting tool 100 may be a milling cutter or drill to which cutting insert 110 can be attached, or may be an end mill or drill for which the cutting insert is not used.

### <Sensor Module>

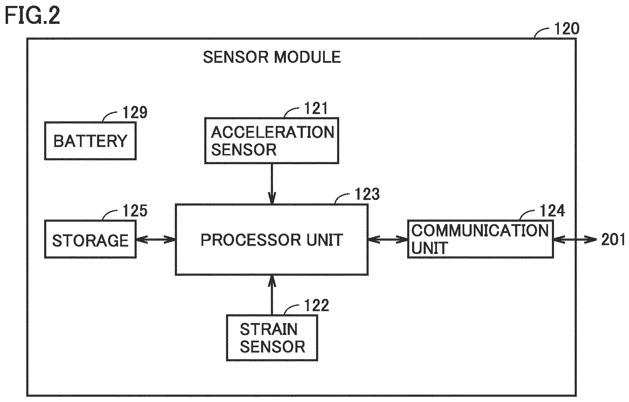

Fig. 2 is a diagram showing the configuration of the sensor module according to the embodiment. Sensor module 120 includes an acceleration sensor 121, a strain sensor 122, a processor unit 123, a communication unit 124, a storage 125, and a battery 129. For example, sensor module 120 is started up by user's operation.

For example, processor unit 123 is realized by a processor such as a CPU (Central Processing Unit) and a DSP (Digital Signal Processor). The processor may be a hardware circuit constituted by an ASIC (Application Specific Integrated Circuit). For example, communication unit 124 is realized by a communication circuit such as a communication IC (Integrated Circuit). For example, storage 125 is a non-volatile memory.

For example, battery 129 is an electric storage device including a primary battery, a secondary battery, a solar battery, a capacitor, or the like, and may have a contactless power feeding function. Battery 129 supplies electric power to circuits of acceleration sensor 121, strain sensor 122, processor unit 123 and communication unit 124.

For example, acceleration sensor 121 and strain sensor 122 are provided near the cutting edge of cutting tool 100. Sensor module 120 is not limited to a configuration in which one acceleration sensor 121 is included, and may have a configuration in which a plurality of acceleration sensors 121 is included. Further, sensor module 120 is not limited to a configuration in which one strain sensor 122 is included, and may have a configuration in which a plurality of strain sensors 122 is included. Further, sensor module 120 may have a configuration in which another sensor such as a pressure sensor and a displacement sensor is included instead of at least one of acceleration sensor 121 and strain sensor 122 or in addition to acceleration sensor 121 and strain sensor 122.

Processor unit 123 generates measurement information indicating the measurement value of acceleration sensor 121 and the measurement value of strain sensor 122. Specifically, at sampling timings according to a prescribed period, processor unit 123 performs AD (Analog Digital) conversion of analog signals received from acceleration sensor 121 and strain sensor 122, and generates the measurement values of the sensors that are digital values after the conversion.

Processor unit 123 outputs the measurement information including the measurement values of the sensors, to communication unit 124. Communication unit 124 sends packets in which the measurement information received from processor unit 123 is stored, to analysis device 200 through wireless device 201.

### <Analysis Device>

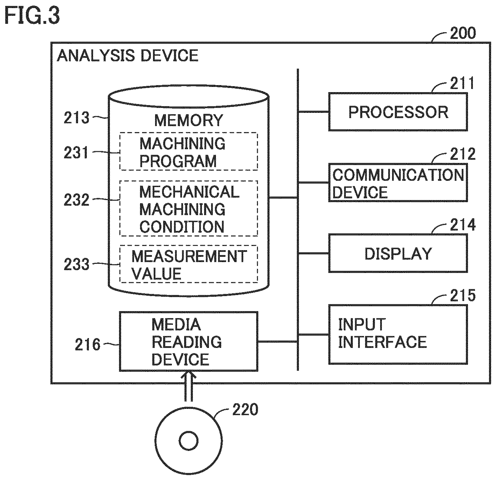

Fig. 3 is a diagram showing the configuration of the analysis device according to the embodiment. As shown in Fig. 3, analysis device 200 includes a processor 211 (processing unit), a communication device 212, a memory 213 (storage), a display 214, an input interface 215, and a media reading device 216.

Processor 211 is a calculation subject that executes various procedures relevant to analysis device 200 by executing various programs (for example, a later-described machining program 231). For example, processor 211 is constituted by a processor such as a CPU and a DSP. Processor 211 may be constituted by a calculation circuit (Processing Circuitry).

Communication device 212 establishes communication with each of machining control device 301 and sensor module 120 through communication means such as a network, and performs sending and receiving of data (information) with each of processing control device 301 and sensor module 120.

Memory 213 is constituted by a volatile memory such as a DRAM (Dynamic Random Access Memory) and an SRAM (Static Random Access Memory) or a non-volatile memory such as a ROM (Read Only Memory), an SSD (Solid State Drive) and an HDD (Hard Disk Drive). Memory 213 stores machining program 231, a mechanical machining condition 232 for the machine tool that is acquired from machining control device 301, and a measurement value 233 that is measured by the sensor. Mechanical machining condition 232 for the machine tool and measurement value 233 measured by the sensor may be stored not in memory 213 but in a storage device (for example, a server or the like) that is connected with analysis device 200 directly or through a network.

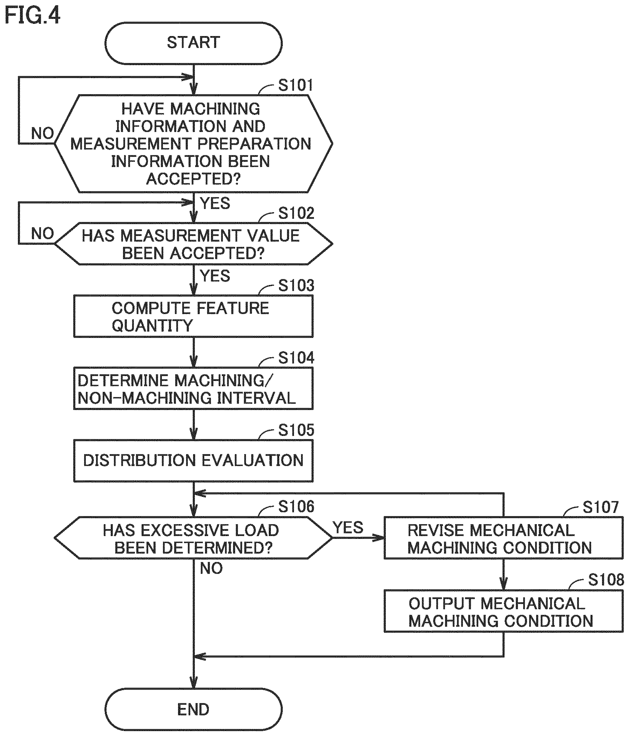

Machining program 231 is a program that is executed by processor 211 (processing unit), that determines the load on cutting tool 100 based on the measurement value measured by the sensor, and that revises the mechanical machining condition for machine tool 300. Processor 211 executes a later-described procedure in a flowchart of Fig. 4 by executing machining program 231.

Media reading device 216 accepts a recording medium 220 in which a variety of programs and data are recorded, and reads the programs and the data from recording medium 220. As recording medium 220, there are a CD (Compact Disk), an SD card (Secure Digital card), a USB memory (Universal Serial Bus memory) and the like. In the embodiment, media reading device 216 reads machining program 231 stored in recording medium 220, and causes memory 213 to store machining program 231.

Display 214 informs the user of a variety of information such as time-series data about the measurement value, by displaying an image.

Input interface 215 is an interface that accepts the input of data to analysis device 200. For example, the user can input an ID and a password and can input information about an instruction from the user, through input interface 55.

### <Wireless Device>

Wireless device 201 is connected with analysis device 200, for example, through a wire. For example, wireless device 201 is an access point. Wireless device 201 acquires the wireless signal received from cutting tool 100, and relays the wireless signal to analysis device 200. For example, wireless device 201 performs, with cutting tool 100, wireless communication using a communication protocol such as ZigBee (R) complying with IEEE 802.15.4, Bluetooth (R) complying with IEEE 802.15.1, and UWB (Ultra-Wide Band) complying with IEEE 802.15.3a. A communication protocol other than the above description may be used between cutting tool 100 and wireless device 201.

### <Procedure in Machining System>

Next, a procedure in machining system 1 will be described. Fig. 4 is a flowchart showing a procedure that is executed by processor 211 of the analysis device according to the embodiment. A procedure step (this is abbreviated as "S", hereinafter) shown in Fig. 4 is realized by the execution of machining program 231 by processor 211 of analysis device 200.

Analysis device 200 determines whether machining information about machine tool 300 and measurement preparation information about the sensor provided in cutting tool 100 have been accepted (S101). The machining information about machine tool 300 includes information such as a machining step, a machining path, a used tool and a cutting condition, and can be acquired from information such as an NC program and a CAM before input from machining control device 301 or to the machining control device, for example. The measurement preparation information includes information such as the kind (the strain sensor/ the acceleration sensor, or the like) of a used sensor, the number of channels (CH) of each sensor, a used channel number, a sampling rate, a sensor gain, a measurement range, a battery voltage and an electric wave intensity, and can be acquired from sensor module 120, for example. For example, the measurement preparation information may include a parameter such as a threshold to be used in the determination about a machining interval, a machining interval to be used in the determination about an excessive load, or a measurement acceptable coefficient, for a stable procedure in machining system 1. As the parameter, for example, a value that is previously set through input interface 215 by the user may be input to analysis device 200. Further, the parameter may be a value that is estimated by statistical processing, a value that is estimated by machine learning, a value that is estimated based on a database of measurement values measured in the past, or the like.

In the case where it is determined that the information has not been accepted (NO in S101), analysis device 200 returns the procedure to S101, and maintains an acceptance state for the information. On the other hand, in the case where it is determined that the information has been accepted (YES in S101), analysis device 200 determines whether the measurement value measured by the sensor of cutting tool 100 has been accepted (S102). Machining control device 301 controls machine tool 300 in accordance with the mechanical machining condition including the set machining path information and cutting condition, and in the case where a machining step (first cutting process) of performing the cutting machining of the workpiece with attached cutting tool 100 is started, analysis device 200 acquires the measurement value of the sensor in the machining step, from sensor module 120.

In the case where it is determined that the measurement value has not been accepted (NO in S102), analysis device 200 returns the procedure to S102, and maintains an acceptance state for the measurement value. On the other hand, in the case where it is determined that the measurement value has been accepted (YES in S102), analysis device 200 computes a feature quantity from the measurement value of the sensor that is obtained in the machining step (S103). Specifically, analysis device 200 accepts the measurement values from acceleration sensor 121 and strain sensor 122 provided in sensor module 120, and performs, for example, computations for preprocessing, basic statistic and correlation to the accepted measurement values, as the computation of the feature quantity. As the preprocessing, for example, computations for the removal or complementation of a missing value, noise processing, FFT (Fast Fourier Transform) processing, vector transformation [magnitude, direction], dimension compression, and the like are performed. Further, as the basic statistic, for example, computations for arithmetic mean, geometric mean, trimmed mean, dispersion, standard deviation, skewness, kurtosis, median, maximum, minimum, and the like are performed. As the correlation, for example, computations for covariance, correlation coefficient, partial correlation coefficient, factor loading, principal component score, and the like are performed. The computation of the feature quantity may include computations for preprocessing for smoothly performing a subsequent procedure, computations for basic statistic and correlation to be used in a subsequent determination procedure, and the like. Further, analysis device 200 may limit the feature quantity that is computed, based on the measurement preparation information accepted in S101, for reducing the load of the computation of the feature quantity.

Analysis device 200 determines a machining interval and a non-machining interval from the acquired time-series data about the measurement value (S 104). In the machining step of machine tool 300, the load is not applied on cutting tool 100 in all intervals. Machining is intermittently performed, or there is a short-time idling interval at which the contact with the workpiece material is not performed. Hence, analysis device 200 determines the machining interval and the non-machining interval, for decreasing information quantity by narrowing down the analysis target only to the measurement value at the machining interval. Specifically, analysis device 200 determines the machining interval and the non-machining interval from the time-series data about the measurement value, using a threshold that is used for the determination about the machining interval and that is set in S101.

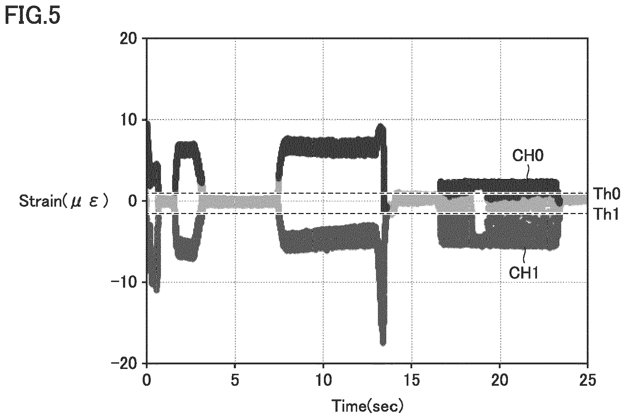

Fig. 5 is a diagram showing an example in which the machining interval is identified from the measurement value of the sensor according to the embodiment. The time-series data about the measurement value shown in Fig. 5 is the time-series data about the measurement value from strain sensor 122. Strain sensor 122 includes two sensors that are different in the attachment position in cutting tool 100. The used channel number of one sensor is CH0, and the used channel number of the other sensor is CH1. In the time-series data about the measurement value shown in Fig. 5, the measurement value from the CH0 sensor is the time-series data on the positive side, and the measurement value from the CH1 sensor is the time-series data on the negative side. When the threshold that is used for the determination about the machining interval and that is set in S101 is an absolute value, the positive value of the threshold is a threshold Th0 for the measurement value from the CH0 sensor, and the negative value of the threshold is a threshold Th1 for the measurement value from the CH1 sensor. In the embodiment, a plurality of machining intervals in the case where one product is processed is identified. A plurality of machining intervals in the case where a plurality of products is continuously processed may be identified.

Analysis device 200 identifies measurement value intervals where the measurement value from the CH0 sensor is more than threshold Th0, as the machining interval, sets the color of measurement values at non-machining intervals to gray as shown in Fig. 5, and applies the gray display to corresponding non-machining intervals for CH1. Analysis device 200 may identify measurement value intervals where the measurement value from the CH1 sensor is less than threshold Th1, as the machining interval, and may set the color of measurement values at non-machining intervals to gray as shown in Fig. 5. In Fig. 5, from the intervals in one machining step, four machining intervals are identified for each of the CH0 and CH1 sensors.

Analysis device 200 determines the machining interval and the non-machining interval based on the threshold set in S101, but the threshold does not need to be a previously set value. For example, analysis device 200 may set the threshold from a percentile at which the measurement value is close to zero (a value for non-machining), based on a distribution evaluation such as a histogram. Further, analysis device 200 may set the threshold using the feature quantity computed in S103. Furthermore, analysis device 200 may display the time-series data about the measurement value in which the machining interval is identified as shown in Fig. 5, on display 214. For example, 1 percentile value (the value of data corresponding to 1% from the larger one of the absolute values of the maximum and the minimum) of each data is obtained.

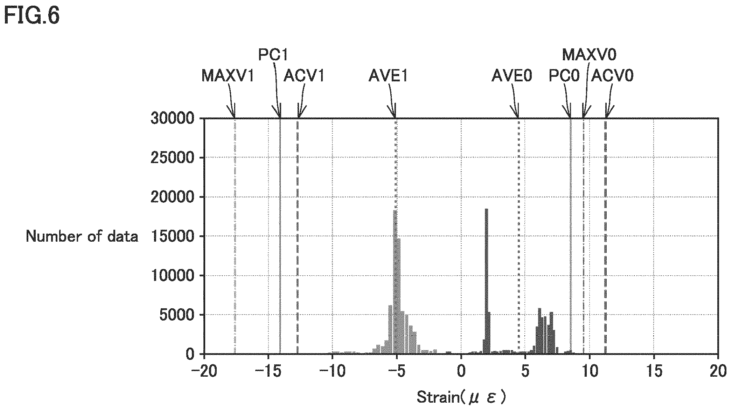

Next, analysis device 200 performs a distribution evaluation to the measurement value at the machining interval identified in S 104 (S105). Specifically, analysis device 200 creates a histogram from the time-series data about the measurement value at the machining interval, and evaluates the magnitude and measurement frequency of the load that is applied on cutting tool 100. Fig. 6 is a diagram showing an example in which the distribution evaluation is performed to the measurement value of the sensor according to the embodiment. In Fig. 6, the feature quantity calculated in S 103 is also illustrated. Specifically, each of an average AVE0, a maximum MAXV0 and a percentile value PC0 of the measurement value measured by the CH0 sensor and an average AVE1, a minimum MAXV1 and a percentile value PC1 of the measurement value measured by the CH1 sensor is illustrated in the histogram in Fig. 6.

Maximum MAXV0 is employed for the measurement value measured by the CH0 sensor, and minimum MAXV1 is employed for the measurement value measured by the CH1 sensor. This is because the larger one of the absolute values of the maximum and minimum of the measurement value is employed. That is, the maximum, for which the absolute value is large, is employed because the measurement value measured by the CH0 sensor is a positive value, and the minimum, for which the absolute value is large, is employed because the measurement value measured by the CH1 sensor is a negative value.

As percentile value PC0 for the CH0 sensor, a value at a prescribed rank (or at a prescribed interval) in an order from the largest value on the basis of maximum MAXV0 is employed. Further, as percentile value PC1 for the CH1 sensor, a value at a prescribed rank (or at a prescribed interval) in an order from the smallest value on the basis of minimum MAXV1 is employed. As for the prescribed rank (or at the prescribed interval), the user may previously set the rank, but a rank estimated by statistical processing, a rank estimated by machine learning, a rank estimated based on a database of measurement values measured in the past, or the like may be set.

Analysis device 200 compares maximum MAXV0 or percentile value PC0 shown in Fig. 6 and a measurement acceptable value ACV0, and determines the generation of an excessive load that is locally applied on cutting tool 100. Further, analysis device 200 compares minimum MAXV1 or percentile value PC1 shown in Fig. 6 and a measurement acceptable value ACV1, and determines the generation of an excessive load that is locally applied on cutting tool 100. Measurement acceptable value ACV0 is obtained as the product of a previously set measurement acceptable coefficient K and average AVE0. Similarly, measurement acceptable value ACV1 is obtained as the product of previously set measurement acceptable coefficient K and average AVE1. That is, analysis device 200 permits the load up to a multiple of measurement acceptable value K with respect to an average load that is applied on cutting tool 100, and revises the mechanical machining condition. For example, when measurement acceptable coefficient K is 2.5, measurement acceptable values ACV0, ACV1 have a value of 2.5 times of averages AVE0, AVE1.

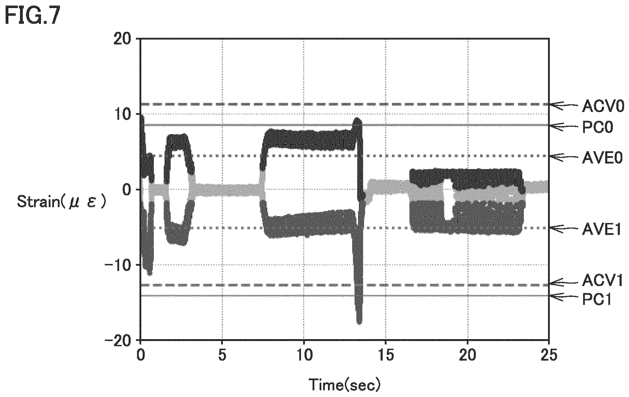

As measurement acceptable coefficient K, values that are different for each feature quantity, for each kind of the sensor, and for each used channel number (for example, CH0, CH1) of the sensor may be previously set. Further, the distribution evaluation shown in Fig. 6 is performed using the histogram, but the time-series data (measurement waveform) about the measurement value of the sensor may be used. Fig. 7 is a diagram showing an example in which the result of the distribution evaluation is applied to the time-series data about the measurement value of the sensor according to the embodiment. Specifically, each of average AVE0, percentile value PC0 and measurement acceptable value ACV0 of the measurement value measured by the CH0 sensor and average AVE1, percentile value PC1 and measurement acceptable value ACV1 of the measurement value measured by the CH1 sensor is illustrated in a waveform in Fig. 7.

Analysis device 200 may display the histogram shown in Fig. 6 or the measurement waveform shown in Fig. 7, on display 214. In the case where analysis device 200 includes a plurality of sensors (CH0, CH1, for example) different in the attachment position in cutting tool 100, the number of sensors that perform the distribution evaluation may be limited for reducing the computation load.

Back to Fig. 4, analysis device 200 determines whether an excessive load has been generated in the measurement value measured by the sensor, based on the distribution evaluation processed in S105 (S106). Specifically, about whether the excessive load has been generated in the measurement value measured by the CH0 sensor, analysis device 200 compares maximum MAXV0 or percentile value PC0 with measurement acceptable value ACV0, and determines that the excessive load has been generated on cutting tool 100, when maximum MAXV0 or percentile value PC0 is more than measurement acceptable value ACV0. Similarly, about whether the excessive load has been generated in the measurement value measured by the CH1 sensor, analysis device 200 compares minimum MAXV1 or percentile value PC1 with measurement acceptable value ACV1, and determines that the excessive load has been generated on cutting tool 100, when minimum MAXV1 or percentile value PC1 is less than measurement acceptable value ACV1.

That is, analysis device 200 determines that the excessive load has been generated on cutting tool 100, based on whether an excessive load generation condition of |MAXV| > |ACV| or |PC| > |ACV| has been fulfilled. Here, |MAXV| shows the absolute value of the maximum or minimum, |ACV| shows the absolute value of the measurement acceptable value, and |PC| shows the absolute value of the percentile value.

Further, analysis device 200 can perform the determination while excluding an irregular measurement value or a measurement value that is an abnormal value, by determining the generation of the excessive load on cutting tool 100 using not the absolute value of the maximum or minimum but the absolute value of the percentile value. That is, analysis device 200 can determine a state where the excessive load has been continuously applied on cutting tool 100 for a prescribed interval, and can more accurately identify the interval at which the mechanical machining condition needs to be revised. The prescribed interval is previously set in S101 as an interval that is used for the determination about the excessive load.

Analysis device 200 may display the histogram shown in Fig. 6 or the measurement waveform shown in Fig. 7, on display 214, may cause the user to manually designate the interval at which the excessive load has been generated, on the histogram or the measurement waveform, and may accept the information from input interface 215.

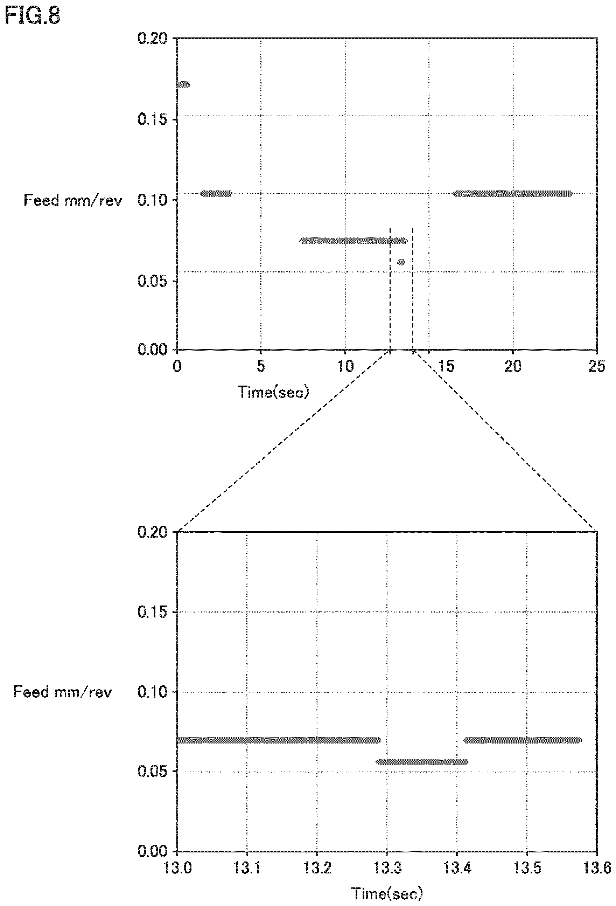

In the case where it is determined that the excessive load has been generated (YES in S106), analysis device 200 revises the mechanical machining condition for the interval at which the excessive load has been generated and that is identified in S106 (S107). For example, analysis device 200 revises the mechanical machining condition for the interval at which the excessive load has been generated, based on a revision coefficient. Fig. 8 is a diagram showing an example of the revised value for revising the mechanical machining condition for the machine tool according to the embodiment. In Fig. 8, the feed way (feed speed) of cutting tool 100 that is one of the mechanical machining conditions is shown, and the feed speed is set for each time. The abscissa axis in Fig. 8 indicates time, and the ordinate axis indicates the feed speed.

As shown in Fig. 8, analysis device 200 identifies an interval of about 13.29 seconds to about 13.42 seconds, as the interval at which the excessive load has been generated, and performs such a revision that the feed speed at this interval is multiplied by the revision coefficient and the feed speed is decreased. For example, the revision coefficient is a value resulting from dividing percentile value PC1 by minimum MAXV1, and is about 0.8 in the example shown in Fig. 6. Therefore, the revision into a feed speed (about 0.56 mm/rev) resulting from multiplying the original feed speed (about 0.7 mm/rev) at the interval of about 13.29 seconds to about 13.42 seconds shown in Fig. 8 by the revision coefficient (about 0.8) is performed.

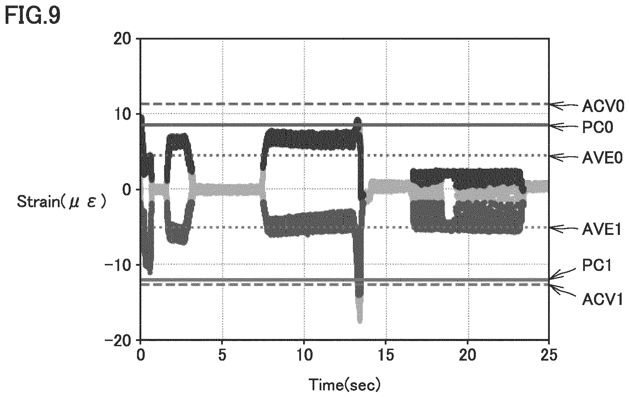

Analysis device 200 estimates the measurement value of the sensor after the mechanical machining condition is revised, returns the procedure to S106, and performs the determination about the excessive load again. Fig. 9 is a diagram showing an example of the estimated measurement value of the sensor after the revision of the mechanical machining condition for the machine tool according to the embodiment. In Fig. 9, each of percentile values PC0, PC1 and measurement acceptable values ACV0, ACV1 calculated from the estimated measurement value of the sensor is illustrated for the time-series data (measurement waveform) of the estimated measurement values of the sensors CH0, CH1. As can be seen from Fig. 9, percentile value PC1 calculated from the estimated measurement value of the sensor is -14.1 (µε), and is less than the absolute value of measurement acceptable value ACV1, and the excessive load generation condition is satisfied. In Fig. 9, the color of the measurement value of the sensor that is restrained by the revised mechanical machining condition is gray.

On the other hand, in the case where the estimated measurement value of the sensor still generates the excessive load, analysis device 200 performs the revision again because of an insufficient revision of the mechanical machining condition. Analysis device 200 revises the mechanical machining condition so as to reduce the load that is applied on cutting tool 100, and therefore the computation converges in a realistic range of the mechanical machining condition such that the excessive load generation condition is satisfied.

Analysis device 200 revises the mechanical machining condition based on the computation result, and outputs the updated mechanical machining condition to machining control device 301 (S108). After outputting the updated mechanical machining condition to machining control device 301, analysis device 200 ends the procedure. Machining control device 301 controls machine tool 300 in accordance with the updated mechanical machining condition, and performs the cutting machining of the workpiece with attached cutting tool 100. Analysis device 200 may measure, with the sensor, the load that is applied on cutting tool 100 when the machining is performed under the updated mechanical machining condition, and may perform the determination about the excessive load again. In the case where it is determined that the excessive load has not been generated (NO in S106), analysis device 200 ends the procedure without revising the mechanical machining condition.

The above-described example shows an example in which Analysis device 200 revises only the feed way (feed speed) of cutting tool 100 from the mechanical machining condition, but without being limited to this, any one or a combination of conditions relevant to the cutting quantity of the workpiece material, as exemplified by the coordinate position of cutting tool 100, the locus of cutting tool 100, the number of paths, and the cutting way of cutting tool 100, may be revised.

The flowchart shown in Fig. 4 shows an example in which analysis device 200 revises the mechanical machining condition based on the measurement value of the sensor that is measured in the first cutting process, and causes machining control device 301 to perform the subsequent machining (second cutting process) under the mechanical machining condition that does not generate the excessive load. However, without being limited to this, by executing the flowchart shown in Fig. 4 while the machining step is continued, analysis device 200 may perform a feedback control to automatically revise the mechanical machining condition based on the last measured measurement value of the sensor and cause machining control device 301 to perform machining under the mechanical machining condition that does not generate the excessive load. Thereby, machining system 1 or machining condition management system 2 can automatically equalize the load that is applied on cutting tool 100 in the machining step.

### [Function Effect]

In machining condition management system 2, processor 211 determines the load on cutting tool 100 based on the measurement value in the first cutting process under the mechanical machining condition, calculates the revised value for revising the mechanical machining condition for at least one machining interval that has fulfilled a prescribed condition in the determination for the first cutting process, updates the mechanical machining condition in the second cutting process, based on the calculated revised value, and outputs the mechanical machining condition in the second cutting process. Thereby, processor 211 determines the load on cutting tool 100 based on the measurement value in the first cutting process under the mechanical machining condition, and calculates the revised value for revising the mechanical machining condition for at least machining interval that has fulfilled the prescribed condition in the determination for the first cutting process, and therefore, it is possible to appropriately revise the mechanical machining condition based on the determination about the load on cutting tool 100.

In machining condition management system 2, processor 211 determines that an interval at which the measurement value in the first cutting process exceeds a previously set threshold is the machining interval. Thereby, it is possible to distinctively identify the machining interval and the non-machining interval for the time-series data about the measurement value measured by the sensor.

In machining condition management system 2, processor 211 obtains the distribution of the measurement value in the first cutting process, and determines the interval at which the excessive load has been generated, based on the statistic of the distribution. Thereby, it is possible to determine at which the excessive load has been generated, by comparing loads on the cutting tool at vicinal machining paths.

In machining condition management system 2, the sensor includes at least one of the strain sensor, the pressure sensor, and the displacement sensor. Thereby, it is possible to more accurately determine the state of the cutting edge of the cutting tool.

In machining condition management system 2, processor 211 identifies an interval at which the mechanical machining condition is revised, for the time-series data about the measurement value, and displays the interval at which the mechanical machining condition is revised, on display 214. Thereby, it is possible to easily know, from the display unit, an interval at which the mechanical machining condition has been appropriately revised based on the determination about the load on the cutting tool.

### [Modification]

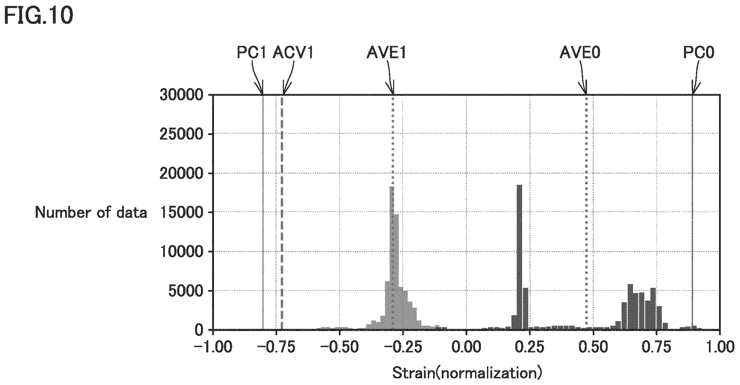

In the embodiment, in the histogram shown in Fig. 6, the distribution evaluation is performed as the measurement frequency for the measurement value itself measured by the sensor, but the distribution evaluation may be performed after the measurement value measured by the sensor is normalized by being divided by the absolute value of the maximum or minimum of the measurement value. Fig. 10 is a diagram showing an example of the distribution evaluation normalized for the measurement value of the sensor according to the embodiment. In Fig. 10, the maximum of the measurement value is "1" or the minimum is "-1", and each of variables such as averages AVE0, AVE1, measurement acceptable values ACV0, ACV1 and percentile values PC0, PC1 has a value after the division by the absolute value of the maximum or the minimum. Therefore, when obtaining the revised value in the mechanical machining condition, analysis device 200 can use the calculated variable with no change, without obtaining the revision coefficient. Specifically, for the revision of the mechanical machining condition for the interval at which the excessive load has been generated, analysis device 200 can obtain the revised value in the mechanical machining condition, simply by directly multiplying the feed speed of cutting tool 100 by the value (about 0.8) of percentile value PC1.

Further, in the embodiment, it has been described that procedures of S101 to S104 shown in Fig. 4 are performed by analysis device 200, but the procedures may be performed by sensor module 120. Thereby, it is possible to decrease the data quantity that is sent from sensor module 120 to analysis device 200, and to restrain the computation load on analysis device 200.

Furthermore, when the processing capacity of the processor of processor unit 123 of sensor module 120 is high, procedures after S104, as exemplified by the distribution evaluation, the excessive load determination and the mechanical machining condition revision, may be performed by sensor module 120. In this case, analysis device 200 is unnecessary, and the mechanical machining condition revised by sensor module 120 is directly output to machining control device 301.

Machine tool 300 and machining control device 301 shown in Fig. 1 are illustrated as separate configurations, but machine tool 300 and machining control device 301 may constitute an integrated configuration. Further, it is allowable to adopt a machining system in which a plurality of machine tools 300 is connected with one machining control device 301.

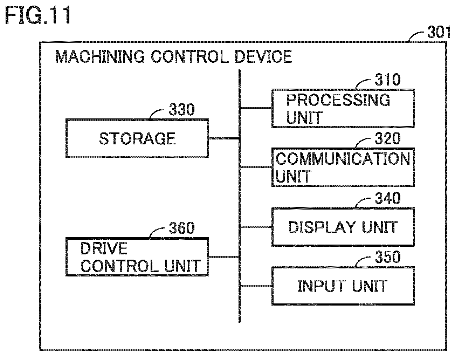

Fig. 11 is a diagram showing the configuration of the machining control device according to the embodiment. As shown in Fig. 11, machining control device 301 includes a processing unit 310, a communication unit 320, a storage 330, a display unit 340, an input unit 350, and a drive control unit 360.

Calculation unit 310 is a processor that executes various programs (for example, control programs for controlling machine tool 300), and is a calculation subject that executes various procedures relevant to machining control device 301. For example, processing unit 310 is constituted by a processor such as a CPU and a DSP.

Communication unit 320 establishes communication with each of analysis device 200 and machine tool 300 through communication means such as a network, and performs sending and receiving of data (information) with each of analysis device 200 and machine tool 300.

Storage unit 330 is constituted by a volatile memory such as a DRAM and an SRAM and a non-volatile memory such as a ROM, an SSD and an HDD. The storage 330 stores control programs, the mechanical machining condition for machine tool 300, and the like.

Display unit 340 is a display unit that informs the user of a variety of information such as the mechanical machining condition for machine tool 300 by displaying an image.

Input unit 350 is an interface that accepts the input of data to machining control device 301. For example, the user can input an ID and a password and can input information about an instruction from the user, through input unit 350.

Drive control unit 360 controls machine tool 300 based on a control program that is executed in accordance with the previously set mechanical machining condition, and performs the cutting machining of the workpiece with attached cutting tool 100.

Since machining control device 301 includes processing unit 310, processing unit 310 may execute machining program 231 in analysis device 200 and may perform the revision of the mechanical machining condition based on the measurement value of the sensor. In this case, analysis device 200 is unnecessary, and machining control device 301 directly accepts the measurement value of the sensor from sensor module 120.

Further, since machining control device 301 includes storage 330, mechanical machining condition 232 for the machine tool that is stored in memory 213 of analysis device 200 and measurement value 233 that is measured by the sensor may be stored in storage 330.

It should be understood that the embodiments and example disclosed herein are examples and are not limitative in all respects. It is intended that the scope of the present disclosure is shown not by the above embodiments but by the claims and includes all alterations within a meaning and range equivalent to the claims.

### REFERENCE SIGNS LIST

1 machining system, 2 machining condition management system, 211 processor, 50 tool rest, 55, 215 input interface, 100 cutting tool, 110 cutting insert, 113A, 113B fixing member, 120 sensor module, 121 acceleration sensor, 122 CH0, CH1 sensor, 123 processor unit, 124, 320 communication unit, 125, 330 storage, 129 battery, 200 analysis device, 201 wireless device, 212 communication device, 213 memory, 214 display, 216 media reading device, 220 storage medium, 231 machining program, 232 mechanical machining condition, 233 measurement value, 300 machine tool, 301 machining control device, 310 processing unit, 340 display unit, 350 input unit, 360 drive control unit

## Claims

1. A machining condition management system comprising:
a cutting tool that includes a cutting edge and a sensor;
a storage that stores a mechanical machining condition for a machine tool and a measurement value, the machine tool performing machining using the cutting tool, the measurement value being measured by the sensor; and
a processing unit that performs revision of the mechanical machining condition based on the mechanical machining condition and the measurement value stored in the storage, wherein
the processing unit
determines a load on the cutting tool based on the measurement value in a first cutting process under the mechanical machining condition,
calculates a revised value for revising the mechanical machining condition for at least one machining interval that has fulfilled a prescribed condition in the determination for the first cutting process, and
updates the mechanical machining condition in a second cutting process, based on the calculated revised value, and outputs the mechanical machining condition in the second cutting process.

2. The machining condition management system according to claim 1, wherein the processing unit determines that an interval at which the measurement value in the first cutting process exceeds a previously set threshold is the machining interval.

3. The machining condition management system according to claim 1 or 2, wherein the processing unit obtains a distribution of the measurement value in the first cutting process, and determines an interval at which an excessive load has been generated, based on a statistic of the distribution.

4. The machining condition management system according to any one of claims 1 to 3, wherein the sensor includes at least one of a strain sensor, a pressure sensor, and a displacement sensor.

5. The machining condition management system according to any one of claims 1 to 4, further comprising a display unit that can display time-series data about the measurement value, wherein
the processing unit identifies an interval at which the mechanical machining condition is revised, for the time-series data about the measurement value, and displays the interval at which the mechanical machining condition is revised, on the display unit.

6. A machining control device comprising:
a storage that stores a mechanical machining condition for a machine tool and a measurement value, the machine tool performing machining using a cutting tool that includes a cutting edge and a sensor, the measurement value being measured by the sensor;
a processing unit that performs revision of the mechanical machining condition based on the mechanical machining condition and the measurement value stored in the storage; and
a drive control unit that performs machining under the mechanical machining condition, wherein
the processing unit
determines a load on the cutting tool based on the measurement value in a first cutting process under the mechanical machining condition,
calculates a revised value for revising the mechanical machining condition for at least one machining interval that has fulfilled a prescribed condition in the determination for the first cutting process, and
updates the mechanical machining condition in a second cutting process, based on the calculated revised value, and outputs the mechanical machining condition in the second cutting process, to the drive control unit.

7. A machining system comprising: a machine tool that performs machining using a cutting tool that includes a cutting edge and a sensor; and a machining control device that controls the machine tool based on a mechanical machining condition,
the machining control device comprising:
a storage that stores the mechanical machining condition for the machine tool and a measurement value, the measurement value being measured by the sensor;
a processing unit that performs revision of the mechanical machining condition based on the mechanical machining condition and the measurement value stored in the storage; and
a drive control unit that performs machining under the mechanical machining condition, wherein
the processing unit
determines a load on the cutting tool based on the measurement value in a first cutting process under the mechanical machining condition,
calculates a revised value for revising the mechanical machining condition for at least one machining interval that has fulfilled a prescribed condition in the determination for the first cutting process, and
updates the mechanical machining condition in a second cutting process, based on the calculated revised value, and outputs the mechanical machining condition in the second cutting process, to the drive control unit.

8. A machining program that is executed by a processing unit that performs revision of a mechanical machining condition for a machine tool based on the mechanical machining condition and a measurement value, the machine tool performing machining using a cutting tool that includes a cutting edge and a sensor, the measurement value being measured by the sensor,
the machining program comprising:
determining a load on the cutting tool based on the measurement value in a first cutting process under the mechanical machining condition;
calculating a revised value for revising the mechanical machining condition for at least one machining interval that has fulfilled a prescribed condition in the determination for the first cutting process; and
updating the mechanical machining condition in a second cutting process, based on the calculated revised value, and outputting the mechanical machining condition in the second cutting process.
